(19) Europäisches Patentamt
European Patent Office
Office européen des brevets

(11) Publication number: 0 320 241 A2

(12) **EUROPEAN PATENT APPLICATION**

(21) Application number: 88311594.1

(22) Date of filing: 07.12.88

(51) Int. Cl.4: G11B 5/72 , G11B 5/84 , G11B 5/71

(30) Priority: 07.12.87 JP 309329/87
23.02.88 JP 39810/88

(43) Date of publication of application:
14.06.89 Bulletin 89/24

(84) Designated Contracting States:
FR NL

(71) Applicant: Hitachi Maxell Ltd.
No 1-1-88, Ushitora Ibaraki-shi
Osaka-fu(JP)

(72) Inventor: Kitakami, Osamu
20-2 Kubogaoka-4-chome Moriyamachi
Kitasoma-gun Ibaraki-ken(JP)
Inventor: Fujiwara, Hideo
2-24-9, Keyakidai Moriyamachi
Kitasoma-gun Ibaraki-ken(JP)
Inventor: Ogawa, Yoichi
Mezon Atago B-203 744-2, Noda
Noda-shi(JP)
Inventor: Daimon, Hideo
2-2-202, Togashira-1-chome
Toride-shi(JP)
Inventor: Ichijo, Minoru
14-8, Kubogaoka-4-chome Moriyamachi
Kitasoma-gun Ibaraki-ken(JP)

(74) Representative: Cresswell, Thomas Anthony et al
J.A. Kemp & Co. 14 South Square Gray's Inn
London WC1R 5EU(GB)

(54) **Magnetic recording medium and process for preparing the same.**

(57) A magnetic recording medium comprises a non-magnetic substrate, a magnetic recording layer, optionally a hard protective layer and a lubricant layer. The lubricant layer comprises a lubricant having a strong affinity for the magnetic recording or hard protective layer and mixed therewith or as a discrete further layer, a lubricant having a strong affinity for magnetic head constituent materials. Alternatively, where the hard protective layer is present and comprises boron, boron compounds or carbon, the lubricating layer may comprise a perfluorocarbon lubricant having a 5, 6 or 7-membered heterocyclic group with least one nitrogen atom and at least one double bond in the ring at least at one terminal.

EP 0 320 241 A2

# MAGNETIC RECORDING MEDIUM AND PROCESS FOR PREPARING THE SAME

## BACKGROUND OF THE INVENTION

This invention relates to a magnetic recording medium and a process for preparing the same, and more particularly to a magnetic recording medium having an improved protective lubricant layer and a process for preparing the same.

Magnetic recording technique has been widely used as a rewritable recording process. As is obvious from the recording principle of the process the distance between a magnetic head and a magnetic recording medium must be as small as possible in order to conduct effective recording and reproduction. As a result, frequent collisions and sliding take place therebetween and consequently frictional abrasions between the magnetic head and the magnetic recording medium have been a very serious problem. Particularly, with the recent increasing demand for higher density recording, development of this film-type recording media, which have been so far generally regarded as capable of providing a narrower spacing between the magnetic head and the magnetic recording medium but as not so strong against the frictional abrasions, thus has been highly required. To this end it is a key point in the practical application of the thin film-type magnetic recording medium how completely the problem of frictional abrasions can be solved. As to coating type magnetic recording media already in practical application a much higher reliability for the durability, though it now has no practical trouble, is still required for lowering the frequency of accidental product failure.

## SUMMARY OF THE INVENTION

An object of the present invention is to provide a magnetic recording medium with distinguished durability, corrosion resistance and resistance to sliding and a process for preparing the medium.

As a result of extensive studies of magnetic recording media, the present inventors have found that a magnetic recording medium with distinguished durability, corrosion resistance and resistance to sliding can be obtained by providing a lubricant layer composed of at least one of lubricants having a strong affinity to a magnetic recording layer or a protective layer formed on the magnetic recording layer and at least one of lubricants having a strong affinity to a magnetic head in a mixture together or in discrete layers in this order, respectively.

Furthermore, the present inventors have found that a magnetic recording medium with distinguished durability and corrosion resistance can be obtained by providing a hard protective layer of at least one of B, boron compounds and C on the surface of a magnetic recording layer and coating the protective layer with only a specific perfluorocarbon lubricant having a 5, 6 or 7-membered heterocyclic group with at least one nitrogen atom and at least one double bond in the ring or a hydroxyl group at least at one terminal, formed on the hard protective layer.

That is, the present invention provides a magnetic recording medium, which comprises a non-magnetic substrate, a magnetic recording layer formed on the substrate and a lubricant layer formed on the magnetic recording layer or a hard protective layer, when formed on the magnetic recording layer, the lubricant layer being composed of at least one of lubricants having a strong affinity to the magnetic recording layer or the hard protective layer and at least one of lubricants having a strong affinity to magnetic head constituent materials in a mixture together or in discrete layers in this order, respectively.

Further, the present invention provides a magnetic recording medium, which comprises a non-magnetic substrate, a magnetic recording layer formed on the substrate, a hard protective layer composed of at least one of B, boron compounds and C on the magnetic recording layer and a lubricant layer composed of a perfluorocarbon lubricant having a 5, 6 or 7-membered heterocyclic group with at least one nitrogen atom and at least one double bond in the ring or a hydroxyl group at least at one terminal, formed on the hard protective layer, where the surface of the hard protective layer can be subjected to a sputter etching with an inert gas or an oxygen gas and then the lubricant layer can be formed on the sputter-etched surface of the hard protective layer, whereby the durability can be further improved.

Heretofore, the lubricant for the magnetic recording medium has been selected on the basis that it can readily wet the surface of the magnetic recording layer or the hard protective layer and can be strongly adsorbed thereon. As a result of extensive studies of lubricants, the present inventors have found that even lubricants having a strong affinity to the magnetic recording layer or the hard protective layer do not always

improve the durability, depending upon the constituent materials of the magnetic head to be used. As a result of further studies, the present inventors have found that, when the affinity to constituent materials of both magnetic head and magnetic recording layer or hard protective layer is high, a resistance to sliding can be obtained, whereas when the affinity to any one of these two is poor, the resistance to sliding is deteriorated. The reasons for this have not been fully clarified yet, but it seems that when a magnetic recording medium or magnetic head has sites with no lubricant owing to the presence of dusts from the air, breakage of the medium or head starts at these sites.

The present inventors have not yet found any lubricants having a good affinity to constituent materials of magnetic recording heads and magnetic heads at the same time. However, the present inventors have found that a magnetic recording medium with distinguished durability and resistance to sliding can be obtained by providing a lubricant layer composed of at least one of lubricants having a strong affinity to constituent materials of the magnetic recording medium or the hard protective layer and at least one of lubricants having a strong affinity to constituent materials of the magnetic head in a mixture together or in discrete layers in this order, respectively.

For example, in combinations of a magnetic recording medium having a hard protective layer composed of at least one of B, boron compounds and C on a metal thin film-type magnetic recording layer and a lubricant layer on the hard protective layer with a magnetic head composed of Fe, Ni, Co or their alloys or ferrite, perfluorocarbon lubricants having a 5, 6 or 7-membered heterocyclic group having at least one nitrogen atom and at least one double bond within the ring at least at one terminal are used as the lubricants having a strong affinity to the constituent materials of the magnetic recording medium or the hard protective layer, whereas perfluorocarbon lubricants having a group of $-CF_3$, -OH, -COOH, -COOR where R is an alkyl group or a fluorinated alkyl group, or -NCO at least at one terminal are used as the lubricants having a strong affinity to the constituents materials of the magnetic head, whereby higher durability and resistance to sliding can be obtained.

The perfluorocarbon lubricants having a 5, 6 or 7-membered heterocyclic group having at least one nitrogen atom and at least one double bond within the ring at least at one terminal are compounds represented by the following general formula (I) or (II):

$RO\text{-}(C_3F_6O)_m\text{-}(CFXO)_n\text{ - }CFX\text{ - }L$ (I)

$R''CFXO\text{-}(C_3F_6O)_x(CFXO)_y\text{-}(C_2F_4O)_z\text{-}CFX\text{-}L$ (II)

wherein R is $-CF_3$, $-C_2F_5$ or $-C_2F_4$, X is F or $-CF_3$, $R''$ is F, $-CF_3$, $-C_2F_5$ or L, m is an integer of 3 to 100, n is a finite integer or 0, m+n is 5 to 100; when n is a finite integer, m/n is 5 to 20 and R is $CF_3$; when n is 0, R is $-C_2F_5$ or $-C_3F_7$, x is a finite integer or 0, y and z are finite integers; when x+y+z is 5 to 200, (x+y)/y is 5 to 0.5; when x is 0, x/y is 1 to 0.5, y+z is 5 to 200, L is a group Y-Z, Y is $-CH_2O-$, $-CH_2OCH_2-$, $-CF_2-$ or $-CF_2-O-$, Z is

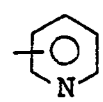

,

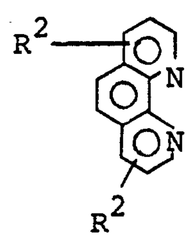

wherein $R^2$ is H, Cl, Br or an alkoxy group of formula E-O- where E is an alkyl residue having 1 to 3 carbon atoms,

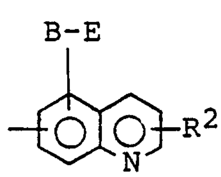

wherein B is O or S and E and $R^2$ have the same meaning as defined above,

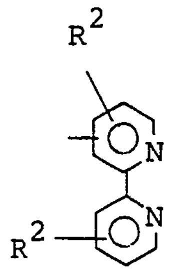

or

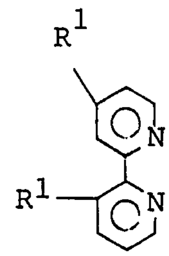

wherein $R^1$ is H or an alkyl group having 1 to 3 carbon atoms and $R^2$ has the same meaning as defined above, or

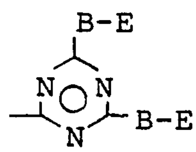

or

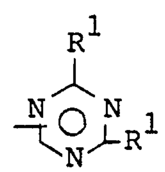

wherein B, E and $R^1$ have the same meanings as defined above.

On the other hand, the prefluorocarbon lubricants having a group of $-CF_3$, -OH, -COOH, -COOR where R is an alkyl group or a fluorinated alkyl group, or -NCO at least at one terminal are compounds represented by the following general formula:

$R^3-CF_2-(C_2F_4O)_m-(CF_2O)_m-CF_2-R^3$ (III)

wherein $R^3$ is $-CF_3$, -COOH, $-COOCH_3$, $-CH_2OH$ or

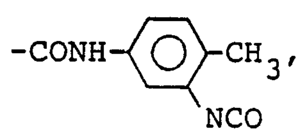

and m and n have the same meaning as defined above.

These perfluorocarbon lubricants are commercially available, for example, with trademark such as Fomblin-Z-DIAC (Monte-Edison Co., Ltd.).

These two kinds of lubricants can be used together in a mixture, unless they undergo chemical reaction therebetween, or can be used in discrete layers, respectively, by providing a layer of a lubricant having a strong affinity to the constituent materials of the magnetic recording layer or the hard protective layer on the magnetic recording layer or on the hand protective layer at first and then providing a layer of a lubricant having a strong affinity to the constituent materials of the magnetic head on the layer of the first lubricant.

The magnetic recording layer of the present magnetic recording medium can be composed of at least one of such ferromagnetic metals such as Co, Fe, Ni or their alloys with Cr and can be formed according to any process, for example, by coating or vapor deposition.

Non-magnetic substrate for use in the present magnetic recording medium includes, for example, polymer films of polyimide, polyethylene terephthalate, etc., glass plates, ceramic plates, such metal plates as aluminum plates, anodically oxidized aluminum plates, brass plates, Si single crystal plates or those with heat oxidized surfaces, etc. The non-magnetic substrates can be surface polished or provided with a polished underlayer such as a nickel-phosphorus alloy layer or an alumite layer for texturing.

The hard protective layer for use in the magnetic recording medium according to the first aspect of the present invention is composed of at least one of B, boron compounds and C and can be formed by physical vapor deposition or chemical vapor deposition such as plasma CVD, etc.

Lubricants for use in the present invention are preferably in a liquid state and a procedure for coating the lubricants is not limited. That is, lubricants can be coated according to the ordinary procedure, for

example, by dipping, brushing, roll coating, gravure printing, etc.

When two kinds of the lubricants undergo no chemical reaction therebetween, they can be applied to the magnetic recording layer or the hard protective layer in a mixture together, whereas when they undergo checmical reaction, a lubricant having a strong affinity to the magnetic recording layer or the hard protective layer must be applied thereto at first and then a lubricant having a strong affinity to the constituent materials of the magnetic head must be applied to the layer of the first lubricant, where the layer of the first lubricant is just thick enough to fully cover the hard protective layer. When the layer of the first lubricant is too thick, it will react with the layer of the second lubricant. Thus, the thickness of the layer of the first lubricant is desirably not more than about 1,000 Å; and total thickness of the lubricant layer in the discrete layer of first and second lubricants is preferably less than 5,000 Å. If the thickness of the hard protective layer and the lubricant layer in discrete layers of the first and second lubricants is too thick, the spacing loss will be large. This is not suitable for the magnetic recording medium.

When the hard protective layer is composed of a thin film of at least one of B, boron compounds and C formed according to the ordinary vapor deposition procedure, for example, by vacuum vapor deposition or sputtering, a dense thin film with a good continuity can be obtained, even if the film is very thin, and no such island structure as in case of other materials is observed at all. By forming such a dense hard protective film with a good continuity on the surface of a recording magnetic layer, permeation of surrounding atmospheric gases into the recording magnetic layer can be prevented and the corrosion resistance of the magnetic recording medium can be considerably improved. Thus, the protective film can have a distinguished corrosion resistance owing to such characteristics of B, boron compounds and C as to readily form a dense thin film with a good continuity. Furthermore, the thin film of at least one of B, boron compounds and C has another characteristic such as high hardness, that is, less susceptible to damages due to external forces, than the foregoing corrosion resistance. The latter characteristic can play an important role in the protection of the magnetic recording layer, but has such a drawback as to readily damage the sliding material, that is, magnetic head owing to the high hardness of the hard protective layer. This drawback may be overcome by applying only a specific perfluorocarbon lubricant having a 5, 6 or 7-membered heterocyclic group having at least one nitrogen atom and at least double bond within the ring at least at one terminal as defined by the general formula (I) or (II) or a perfluorocarbon lubricant having a hydroxyl group at least at one terminal among the perfluorocarbon lubricants defined by the general formula (III) to the surface of the hard protective layer. It is present inventors that have found that damages to the magnetic head can be reduced to minimum when such specific lubricants as mentioned above are applied to the hard protective layer composed of at least one of B, boron compounds and C. This effect seems to be due to the fact that the heterocyclic group or hydroxyl group at the terminal of the perfluorocarbon lubricants is strongly adsorbed onto the surface of the hard protective layer composed of at least one of B, boron compounds and C and the lubricants thus can lubricate the surface of the magnetic recording medium stably for a long time.

The magnetio recording medium according to the present invention may be prepared only by coating the hard protective layers composed of at least one of B, boron compounds and C with only the aforementioned specific perfluorocarbon lubricant according to the ordinary procedure, for example, by spraying, bar coating, brushing, gravure printing, etc. However, the magnetic recording media with such a lubricant layer formed on the surface of the hard protective layer merely by coating have occasionally experienced such accidents as crushing during the sliding over the magnetic head. The present inventors further have found that the crushing is due to a low adsorption strength of the lubricants on the surface of the hard protective layer, and on the basis of this finding the present inventors have further found that the durability of the magnetic recording medium can be much improved by removing adsorbed gases such as nitrogen gas, hydrocarbon gas, etc. from the surface of the hard protective layer by sputter etching, and then applying the aforementioned lubricant to the sputter etched surface of the hard protective layer.

That is, the magnetic recording medium with distinguished durability and corrosion resistance according to the present invention can be prepared by providing a hard protective layer composed of at least one of B, boron compounds and C on the surface of a magnetic recording layer formed on a non-magnetic substrate, subjecting the surface of the hard protective layer to a sputter etching treatment with an inert gas or an oxygen gas, and then coating the surface of the protective layer with only a specific perfluorocarbon lubricant having a 5, 6 or 7-membered heterocyclic group with at least one nitrogen atom and at least one double bond in the ring or a hydroxyl group at least at one terminal.

The hard protective layer for use in the present magnetic recording medium is composed of at least one of B, boron compounds and C. The boron compounds include B-C, B-N and B-Si compounds having a boron content of 50% by atom or higher.

The gas species for sputter etching the surface of the hard protective layer according to the present

invention includes preferably inert gases such as He, Ar, etc. and oxygen gas. Other particularly important sputter etching conditions are etching time and power upon which the etching degree depends and must be controlled to a maximum depth of about 100 Å.

When only one of the specific lubricants is used in a single layer, the thickness of the hard protective layer of the present magnetic recording medium is generally from 30 Å to 1,000 Å. Below 30 Å the dynamic strength of the protective layer is not satisfactory, whereas above 1,000 Å the spacing loss will be larger, resulting in considerable deterioration of recording-reproduction characteristics.

Thus, the thickness of the lubricant layer is generally 30 Å to 1,000 Å. Below 30 Å it is difficult to form a layer of uniform thickness, and there is such a fear that no satisfactory lubricating effect can be obtained, whereas above 1,000 Å the adhesion to the magnetic head occurs and the running property of the magnetic recording medium will be deteriorated.

The present magnetic recording medium includes, for example, magnetic tapes and magnetic disks based on synthetic resin films such as polyester film, polyimide film, etc., and magnetic disks and magnetic drums based on disks and drums of synthetic resin films, aluminum plates, glass plates, etc. in various structural forms in sliding contact with a magnetic head.

The magnetic head for use in the recording and reproduction of the present magnetic recording medium is not particularly limited and includes a ferrite head and a sendust head most widely used, a composite-type magnetic head and a thin film head for use in the high density recording.

## BRIEF DESCRIPTION OF THE DRAWINGS

Fig. 1 is a schematic cross-sectional view of a magnetic recording medium according to one embodiment of the present invention.

Fig. 2 is a schematic cross-sectional view of a magnetic recording medium according to another embodiment of the present invention.

Fig. 3 is a schematic cross-sectional view of a magnetic recording medium according to other embodiment of the present invention.

Fig. 4 is a schematic cross-sectional view of further embodiment of the present invention.

## DETAILED DESCRIPTION OF THE INVENTION

The present invention will be described in detail below, referring to the drawings.

Fig. 1 schematically shows a cross-sectional structure of the present magnetic recording medium 10 having a lubricant layer 1 composed of a single lubricant or a mixture of a lubricant having a strong affinity to a hard protective layer 16 and a lubricant having a strong affinity to a magnetic head, when the former lubricant undergoes no chemical reaction with the latter lubricant, where the lubricant layer is formed on the hard protective layer 16 by coating. Numeral 12 is a non-magnetic substrate and 14 a magnetic recording layer.

Fig. 2 schematically shows a cross-sectional structure of the present magnetic recording medium 10 having a lubricant layer 1 in a double layer structure consisting of a first sublayer 3 composed of a lubricant having a strong affinity to a hard protective layer 16 and a second sublayer 5 having a strong affinity to a magnetic head. Numeral 12 is a non-magnetic substrate and 14 a magnetic recording layer.

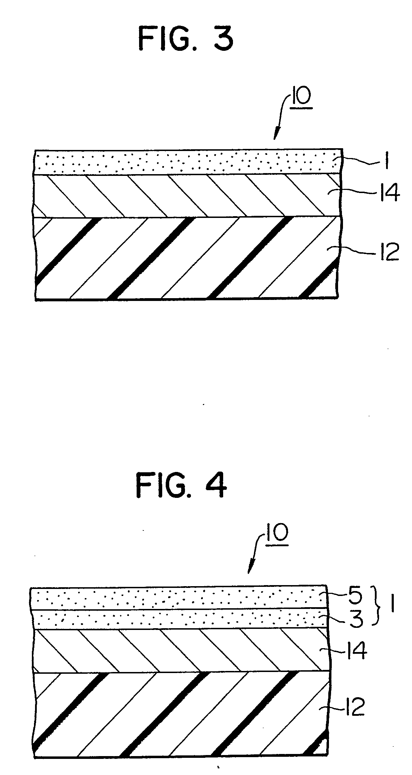

Fig. 3 schematically shows a cross-sectional structure of the present magnetic recording medium 10 having a lubricant layer 1 composed of a mixture of a lubricant having a strong affinity to a magnetic recording layer 14 and a lubricant having a strong affinity to a magnetic head, directly formed on the magnetic recording layer 14 without any hard protective layer, when the former lubricant undergoes no chemical reaction with the latter lubricant, where numeral 12 is a non-magnetic substrate.

Fig. 4 schematically shows a cross-sectional structure of the present magnetic recording medium 10 having a lubricant layer 1 in a double layer structure consisting of a first sublayer 3 composed of a lubricant having a strong affinity to a magnetic recording layer 14 and a second sublayer 5 composed of a lubricant having a strong affinity to a magnetic head, formed directly on the magnetic recording layer 14 without any hard protective layer, as in Fig. 3, where numeral 12 is a non-magnetic substrate.

The present invention will be described in detail below, referring to Examples.

### Example 1

A film of 82 at.% Co - 18 at.% Cr film having a thickness of 0.25 μm as a magnetic recording layer and a film of B having a thickness of 0.02 μm as a hard protective layer were successively formed on a polyimide film substrate having a thickness of 50 μm by vacuum vapor deposition at a substrate temperature of 140 °C and a degree of vacuum of $1.2 \times 10^{-6}$ Torr for the formation of these two films.

Then, a 1:1 mixture of the following two compounds was applied to the surface of the thus formed film of B to a thickness of about 300 Å as a lubricant layer to prepare a 5-inch floppy disk having a structure shown in Fig. 1:

$COOH\text{-}CF_3\text{-}(C_2F_4O)_{10}\text{-}(CF_2O)_{10}\text{-}CF_2\text{-}COOH$

(average molecular weight: 2,000, as will be hereinafter referred to as "Compound A").

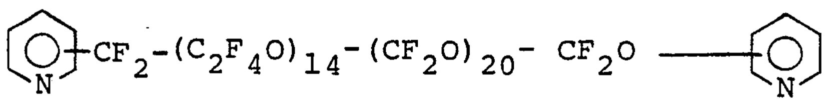

(average molecular weight: 3,000, as will be hereinafter referred to as "Compound B").

Example 2

A 5-inch floppy disk was prepared in the same manner as in Example 1, except that a C-sputter film was provided as the hard protective film in place of the film of B.

Example 3

A 5-inch floppy disk was prepared in the same manner as in Example 1, except that only Compound B was applied to the surface of the film of B to a thickness of about 300 Å as the lubricant layer in place of the mixture of Compounds A and B.

Comparative Example 3

A 5-inch floppy disk was prepared in the same manner as in Example 1, except that only Compound A was applied to the surface of the film of B to a thickness of about 300 Å as the lubricant layer in place of the mixture of Compounds A and B.

Example 4

A 5-inch floppy disk was prepared in the same manner as in Example 1, except that only Compound B was applied to the C-sputter film to a thickness of about 300 Å as the lubricant layer in place of the mixture of Compound A and B.

Comparative Example 2

A 5-inch floppy disk was prepared in the same manner as in Example 2, except that only Compound A was applied to the C-sputtered film to a thickness of about 300 Å as the lubricant layer in place of the mixture of Compounds A and B.

Example 5

A 5-inch floppy disk having a structure shown in Fig. 3 was prepared in the same manner as in Example 1, except no hard protective layer (film of B) was formed at all.

Comparative Example 3

A 5-inch floppy disk was prepared in the same manner as in Example 1, except that neither hard protective layer (film of B) nor lubricant layer composed of the mixture of Compounds A and B was formed.

Comparative Example 4

A 5-inch floppy disk was prepared in the same manner as in Comparative Example 1, except that no hard protective layer (film of B) was formed at all and the magnetic recording layer was subjected to oxidation treatment by exposing the magnetic recording layer to the atmospheric air at 300°C for 30 seconds.

Example 6

A 5-inch floppy disk having a structure shwon in Fig. 2 was prepared in the same manner as in Example 1, except that a lubricant sublayer 3 of Compound B was formed on the hard protective layer (film of B) 16 to a thickness of about 150 Å and another lubricant sublayer 5 of Compound A was formed on the surface of the sublayer 3 to a thickness of about 150 Å to form a lubricant layer 1 of double layer structure in place of the lubricant layer of the mixture of Compounds A and B as shown in Fig. 1.

Example 7

A 5-inch floppy disk having a structure shown in Fig. 4 was prepared in the same manner as in Example 6, except that no hard protective layer (film of B) was formed on the magnetic recording layer and the lubricant layer in the double layer structure was formed directly on the magnetic recording layer already subjected to oxidation treatment by exposing the magnetic recording layer to atmospheric air at 300°C for 30 seconds.

The thus prepared media was tested to evaluate the corrosion resistance in terms of deterioration (%) of saturation magnetization by leaving the media standing in the atmospheric air containing 10 ppm $SO_2$ at 45°C and 70%/RH for 240 hours, to evaluate the durability in terms of pass (sliding) number of a magnetic head (head material: CoN6Zr) by subjecting the media to recording and reproduction in a commercially available 5-inch floppy disk-driving apparatus and counting the sliding number of the magnetic head until the reproduction output was lowered to 70% of the initial output, and also to evaluate the affinity of lubricants to the hard protective layer or the magnetic recording layer and the magnetic head by applying the respective lubricants to the hard protective layer or the magnetic recording layer and the magnetic head, scanning the lubricant-coated surface by Auger electron spectroscopy with a beam diameter of 0.3 $\mu m$ to invenstigate an intensity of distributed F per 100 $\mu m^2$, and comparing the measured intensity of F distribution with standardized ratio of the peak intensity of F in the region of minimum F distribution to that in the region of maximum F distribution.

Results of measurements are summarized in Table 1.

Table 1

| | Element species of hard protective layer | Lubricants used | Affinity to | | Deterioration (%) of saturation magnetization | Pass number (k pass) |
|---|---|---|---|---|---|---|
| | | | Magnetic head | Hard protective layer or magnetic recording layer | | |
| Ex. 1 | B | Mixture of Compounds A and B | 0.94 | 0.96 | 3.2 | 3,000≦ |
| Ex. 2 | C | Mixture of Compounds A and B | 0.94 | 0.95 | 3.6 | 3,000≦ |
| Ex. 3 | B | Compound B | 0.65 | 0.96 | 3.3 | 1,200 |
| Comp. Ex. 1 | B | Compound A | 0.95 | 0.71 | 3.4 | 900 |
| Ex. 4 | C | Compound B | 0.64 | 0.96 | 3.6 | 1,000 |
| Comp. Ex. 2 | C | Compound A | 0.95 | 0.72 | 3.7 | 800 |
| Ex. 5 | none | Mixture of Compounds A and B | 0.95 | 0.92 | 3.6 | 3,000≦ |

- Cont'd -

Table 1 (Cont'd)

| | | | | | | |
|---|---|---|---|---|---|---|
| Comp. Ex. 3 | none | none | - | - | 38.3 | 1> |
| Com. Ex. 4 | none | Compound A | 0.95 | 0.78 | 18.4 | 800 |
| Ex. 6 | B | Compound A for 5*<br>Compound B for 3** | 0.94 | 0.96 | 3.2 | 3,000≦ |
| Ex. 7 | none | Compound A for 5*<br>Compound B for 3** | 0.94 | 0.96 | 3.6 | 3,000≦ |

Remarks: * the layer 5 in Fig. 2 or Fig. 4

** the layer 3 in Fig. 2 or Fig. 4

As is obvious from Table 1, the floppy disks as magnetic recording media having a head protective layer composed of B or C had no large differences in the corrosion resistance therebetween but the sliding resistance (pass number) of the magnetic recording media were drastically improved by providing a lubricant having a strong affinity to the hard protective layer or the magnetic recording layer and a lubricant having a strong affinity to the magnetic head in a mixture together or in discrete layers in this order on the hard protective layer or directly on the magnetic recording layer.

Examples 8 to 12 and Comparative Examples 5 - 15

A magnetic recording layer of 82 at.% Co -18 at.% Cr was formed to a thickness of 0.25 µm on a polyimide substrate having a thickness of 50 µm and then a hard protective layer of B was formed to a thickness of 0.02 µm on the thus formed protective layer by vacuum vapor deposition of a substrate temperature 140°C and 1.2 x $10^{-6}$ Torr. Furthermore, a C-sputter protective layer or $SiO_2$ sputter protective layer was formed to a thickness of 0.02 µm on the magnetic recording layer in place of the B protective layer.

Then, one of perfluorocarbon lubricants having different terminal groups was applied to the protective layer to make 5.25-inch floppy disks having a cross-sectional structure shown in Fig. 1.

The thus prepared floppy disks were tested to investigate the corrosion resistance and the durability in the same condition as before. The magnetic head used for the durability was a ferrite head having a gap length of 0.3 m and a 5.25-inch floppy disk-driving apparatus was used. The results of measurements are shown in Table 2.

Table 2

| | Element species of protective layer | Lubricant (terminal group) | Deterioration (%) of saturation magnitization | Pass number (k pass) |
|---|---|---|---|---|
| Comp. Ex. 5 | none | none | 38 | <1 |
| Comp. Ex. 6 | B | none | 5 | 120 |
| Ex. 8 | B | $-CH_2OH$ | 3 | 3,000≦ |
| Comp. Ex. 7 | B | -COOH | 5 | 600 |
| Comp. Ex. 8 | B | $-CF_3$ | 3 | 1,100 |
| Comp. Ex. 9 | B | $-COOCH_3$ | 3 | 1,300 |
| Comp. Ex. 10 | C | none | 17 | 170 |
| Ex. 9 | C | $-CH_2OH$ | 12 | 3,000≦ |
| Comp. Ex. 11 | C | -COOH | 17 | 620 |
| Comp. Ex. 12 | C | $-CF_3$ | 13 | 1,300 |
| Comp. Ex. 13 | C | $-COOCH_3$ | 14 | 1,180 |
| Comp. Ex. 14 | $SiO_2$ | none | 16 | 20 |
| Comp. Ex. 15 | $SiO_2$ | -COOH | 26 | 70 |

- Cont'd -

Table 2 (Cont'd)

| | | | | |
|---|---|---|---|---|
| Ex. 10 | none | 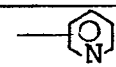 | 10 | 2,700 |
| Ex. 11 | B | 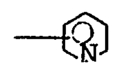 | 2 | 3,000≦ |
| Ex. 12 | C | 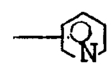 | 9 | 3,000≦ |

Remarks: In Table 2, the terminal group of Examples 8 - 9 and Comparative Examples 5 to 15 shows $R^3$ in the perfluorocarbon represented by the general formula (III), where m and n each are 10, and the terminal group of Examples 10 to 12 are R" and L of the perfluorocarbon represented by the general formula (II), where R" and L are 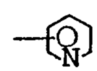 , Z is F, x is 5 and y and z each are 8.

As is obvious from Table 2, the present magnetic recording media having a lubricant layer of perfluorocarbon lubricant having a hydroxyl group or a pyridyl group at the terminal, formed on the hard protective layer of B had distinguished corrosion resistance and durability.

Example 13

A magnetic recording layer of 88 at.% Co -18 at.% Cr was formed to a thickness of 0.36 µm on a polyimide film substrate having a thickness of 50 µm, and then a hard protective layer of B was formed to a thickness of 0.01 µm on the thus formed magnetic recording layer by vacuum vapor deposition at a substrate temperature of 180°C in a vacuum chamber.

Then, the thus prepared medium was taken out of the vacuum chamber and left standing in a room for 12 hours, and then the surface of the hard protective layer was sputter etched with an Ar gas in a sputtering apparatus. Then, a perfluoropolyether lubricant having a pyridyl group at the terminal as used in Example 10 was applied to a thickness of 300 Å to the surface of the etched hard protective layer to prepare a sample A.

For comparison, the perfluoropolyether lubricant having a pyridyl group at the terminal was applied to the surface of the hard protective layer without any sputter etching, that is, the protective layer only left standing in a room for 12 hours to prepare a sample B and the perfluoropolyether lubricant having a pyridyl group at the terminal was applied to the surface of the hard protective layer without any sputter etching after the hard protective layer was subjected to a high temperature-high humidity condition of 60°C - 90%RH for 12 hours to prepare a sample C.

The thus prepared samples A, B and C were subjected to recording and reproduction in a 3.5-inch floppy disk driving apparatus to evaluate the durability in the same manner as before. The magnetic head used for the evaluation of the durability was an amorphous ferrite complex type head having a gap length of 0.3 µm. The results of the measurements are shown in the following Table 3.

Table 3

| Sample | Pass number (k pass) |
|---|---|
| A | 7000 |
| B | 3900 |
| C | 800 - 1000 |

As is obvious from Table 3, Sample A having a lubricant layer after the surface of the hard B protective layer was sputter etched had a durability of about twice as high as that of Sample B without the sputter etching. Sample B was basically identical with the present magnetic recording medium according to Example 11 and had durability of about four times as high as that of Sample C.

As described above, a magnetic recording medium having a lubricant layer composed of a lubricant having a strong affinity to the constituent materials of the magnetic recording medium and a lubricant having a strong affinity to the constituent materials of a magnetic head has distinguished durability and a sliding resistance.

Furthermore, a magnetic recording medium having a lubricant layer composed of a perfluorocarbon lubricant having a 5, 6 or 7-membered heterocyclic group with at least one nitrogen atom and at least one double bond in the ring or a hydroxyl group at least at one terminal, formed on a hard protective layer composed of at least one of B, boron compounds and C on the surface of a magnetic recording layer by coating has good durability and corrosion resistance. By sputter etching the surface of the hard protective layer and then applying the lubricant to the sputter etched protective layer, the resulting magnetic recording layer has a much improved durability, as compared with that of the magnetic recording medium having a lubricant layer on the surface of the hard protective layer without the sputter etching.

## Claims

1. A magnetic recording medium comprising a non-magnetic substrate, a magnetic recording layer on the substrate and a lubricant layer on the magnetic recording layer, the lubricant layer being composed of at least one lubricant having a strong affinity to the magnetic recording to layer and mixed therewith or in a discrete layer thereon at least one lubricant having a strong affinity to magnetic head constituent materials.

2. A magnetic recording medium comprising a non-magnetic substrate, a magnetic recording layer on the substrate, a hard protective layer on the magnetic recording layer and a lubricant layer on the hard protective layer, the lubricant layer being composed of at least one lubricant having a strong affinity to the hard protective layer and mixed therewith or in a discrete layer thereon at least one lubricant having a strong affinity to magnetic head constituent materials.

3. A magnetic recording medium according to claim 2 wherein the hard protective layer is composed of at least one material selected from boron, boron compounds and carbon.

4. A magnetic recording medium according to any one of claims 1 to 3 wherein the lubricant having a strong affinity to the magnetic recording layer or to the hard protective layer is a perfluorocarbon lubricant having a 5, 6 or 7-membered heterocyclic group with at least one nitrogen atom, and at least one double bond within the ring at least at one terminal and the lubricant having a strong affinity to the magnetic head constituent materials is a perfluorocarbon lubricant having $-CF_3$, -OH, -COOH, -NCO or -COOR, where R is an alkyl group or a fluorinated alkyl group, at least at one terminal.

5. A magnetic recording medium according to claim 4, wherein the perfluorocarbon lubricant having a strong affinity to the magnetic recording layer or to the hard protective layer is a compound represented by one of the following general formula.:

$R'O-(C_3F_6O)_m-(CFXO)_n-CFX-L$, or
$R''CFXO-(C_3F_6O)_x-(CFXO)_y-(C_2F_4O)_z-CFX-L$

wherein $R'$ is $-CF_3$, $-C_2F_5$ or $-C_2F_4$;
X is F or $-CF_3$;
$R''$ is F, $-CF_3$, $C_2F_5$ or L;
m is an integer of 3 to 100,
n is a finite integer or 0, m + n is 5 to 100 and when n is a finite integer, m/n is 5 to 20 and R is $CF_3$ and when n is 0, R is $-C_2F_5$ or $-C_3F_7$;
x is a finite integer or 0, y and z finite integers and x + y + z is 5 to 200, (x + y)/y is 5 to 0.5 and when x is 0, z/y is 1 to 0.5 and y + z is 5 to 200;
L is a group Y-Z, Y is $-CH_2O-$,
$-CH_2OCH_2-$, $-CF_2-$ or $-CH_2-O-$, Z is

(a) 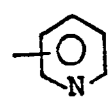 ,

(b) 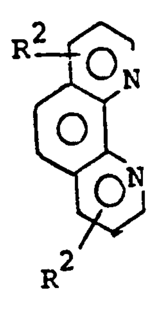

wherein $R^2$ is hydrogen, chlorine, bromine or alkoxy of formula E-O- where E is an alkyl residue having 1 to 3 carbon atoms,

(c) 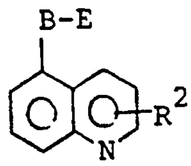

wherein B is oxygen or X and X, E and $R^2$ have the same meanings as defined above,

(d) 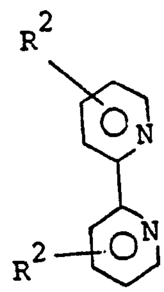 or (e) 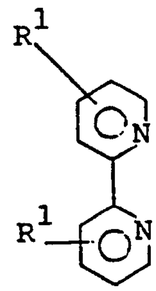

wherein $R^1$ is hydrogen or alkyl having 1 to 3 carbon atoms and $R^2$ has the same meaning as defined above, or

(f) 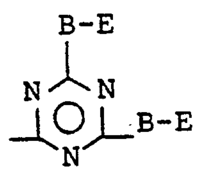 or (g) 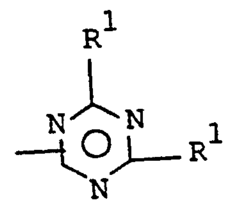

wherein B, E and $R^1$ have the same meanings as defined above,
and the perfluorocarbon lubricant having a strong affinity to the magnetic head constituent materials is a compound of formula $R^3\text{-}CF_2\text{-}(C_2F_4O)_m\text{-}(CF_2O)_n\text{-}CF_2\text{-}R^3$
wherein $R^3$ is $-CF_3$, $-COOH$, $-COOCH_3$, $-CH_2OH$ or

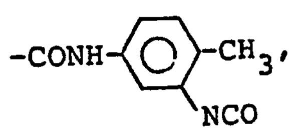

and m and n have the same meanings as defined above.

6. A magnetic recording medium according to any one of claims 1 to 5 wherein the magnetic recording layer is a metallic thin film composed of a least one of Co, Fe and Ni, or their Cr alloys.

7. A magnetic recording medium comprising a non-magnetic substrate, a magnetic recording layer on the substrate, a hard protective layer composed of at least one of B, boron compounds and C on the magnetic recording layer and a lubricant layer composed of a perfluorocarbon lubricant having a 5, 6 or 7-membered heterocyclic group with at least one nitrogen atom and at least one double bond in the ring or a hydroxyl group at least at one terminal, on the hard protective layer.

8. A magnetic recording medium according to Claim 7, wherein the perfluorocarbon lubricant is a perfluorocarbon lubricant having a hydroxyl group at least at one terminal.

9. A magnetic recording medium according to Claim 7, wherein the perfluorocarbon lubricant is a perfluorocarbon lubricant having a 5, 6 or 7-membered heterocyclic group with at least one nitrogen atom and at least one double bond in the ring at least at one terminal.

10. A process for preparing a magnetic recording medium, which comprises applying a hard protective layer composed of at least one of B, boron compounds and C on the surface of a magnetic recording layer formed on a non-magnetic substrate, subjecting the surface of the hard protective layer to a sputter etching treatment with an inert gas or an oxygen gas and then coating the surface of the hard protective layer with a perfluorocarbon lubricant having a 5, 6 or 7-membered heterocyclic group with at least one nitrogen atom and at least one double bond in the ring or a hydroxyl group at least at one terminal.

FIG. 1

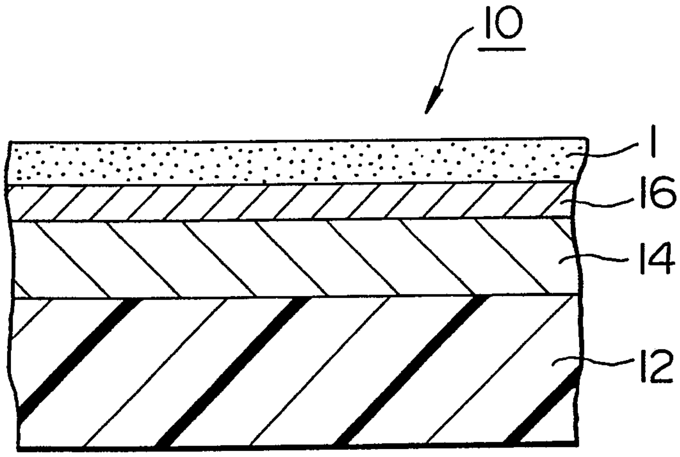


FIG. 2

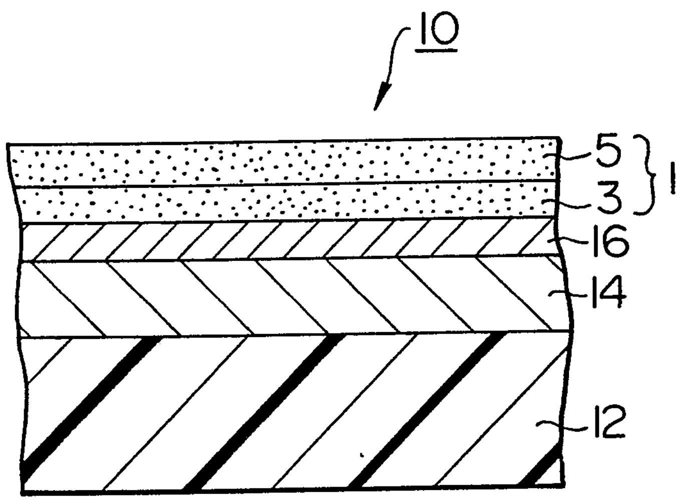

FIG. 3

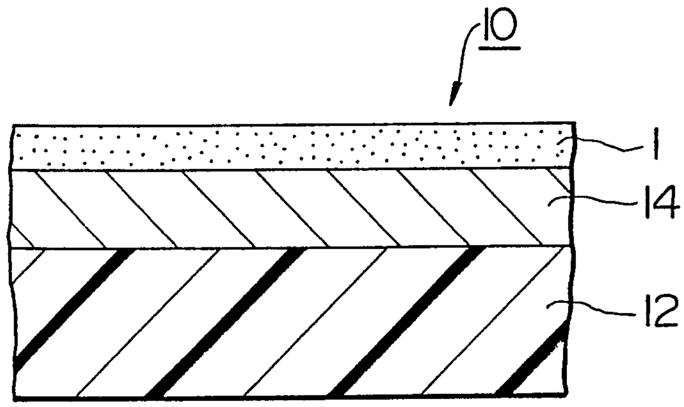


FIG. 4